# EUROPÄISCHE PATENTSCHRIFT

(11) **EP 0 722 970 B1**
(45) Veröffentlichungstag und Bekanntmachung des Hinweises auf die Patenterteilung: **14.04.1999**
(21) Anmeldenummer: 96100684.8
(22) Anmeldetag: 18.01.1996
(51) Int. Cl.: C08G 77/06, C08J 3/12

(54) **Organopolysiloxanharzpulver, Verfahren zu deren Herstellung sowie deren Verwendung in Organopolysiloxanmassen**
Organopolysiloxane resin powders, process for their preparation and their use in organopolysiloxane compositions
Poudres de résine d'organopolysiloxane, leur procédé de préparation et leur utilisation dans des compositions d'organopolysiloxanes

(30) Priorität: 24.01.1995 DE 19502034
(43) Veröffentlichungstag der Anmeldung: 24.07.1996
(73) Patentinhaber: Wacker-Chemie GmbH, 81737 München (DE)
(72) Erfinder: Weidner, Richard, Dr., D-84489 Burghausen (DE); Blank, Hermann, D-84533 Marktl (DE); Frey, Volker, Dr., D-84489 Burghausen (DE); Schuster, Johann, Dr., D-84547 Emmerting (DE)
(74) Vertreter: Budczinski, Angelika

(56) Entgegenhaltungen:
- EP-A- 0 535 687
- EP-A- 0 614 929
- DATABASE WPI Week 9311 Derwent Publications Ltd., London, GB; AN 93-088800 XP002000382 & JP-A-05 032 860 (TOKAI RUBBER IND. LTD.)

## Beschreibung

Die Erfindung betrifft Organopolysiloxanharzpulver mit einem niedrigen Anteil an Feinstaub, Verfahren zu deren Herstellung sowie deren Verwendung in Organopolysiloxanmassen.

Im folgenden werden als MQ-Harze Organopolysiloxanharze bestehend aus Triorganosiloxy-Einheiten ≡SiO_{1/2} (M) und SiO_{4/2}-Einheiten (Q) bezeichnet.

Unter dem Begriff Organopolysiloxane sollen im Rahmen dieser Erfindung auch oligomere Siloxane verstanden werden.

Siliconprodukte, die Organopolysiloxanharze, insbesondere MQ-Harze, enthalten, sind bereits vielfach bekannt und haben ein breites Anwendungspotential. So finden sich Organopolysiloxanharze z.B. als verstärkende Zusätze in RTV-Siliconkautschukmassen, in Einbettungsmassen für Elektronikbauteile, als Zusätze zur Erhöhung der Transparenz in heißvernetzenden Siliconkautschukmassen, als sog. Trennadditive zur Steuerung des Trennverhaltens von Beschichtungen für den Selbstklebesektor, in Trennmitteln, in Antischaummitteln, in Schaumstabilisatoren, in Hautpflegemitteln und in wasserabweisenden Imprägniermitteln.

Diese Siliconprodukte enthalten meistens MQ-Harze mit einem molaren M/Q-Verhältnis von < 1 in gelöster Form. Die MQ-Harze werden üblicherweise in aromatischem Lösungsmittel, wie Toluol oder Xylol, hergestellt.

Die Herstellung der Siliconprodukte erfolgt in der Regel in der Weise, daß zur besseren Verteilung der Harzkomponente die toluolische oder xylolische Harzlösung mit den anderen Bestandteilen der Masse vermischt wird und das aromatische Lösungsmittel, das in der Endformulierung nicht erwünscht ist, anschließend aus der Mischung destillativ entfernt wird. Hierzu sei beispielsweise auf US-A 4,490,500 (General Electric Co.; ausgegeben am 25. Dezember 1984) verwiesen. Bei Organopolysiloxanmassen, die sowohl niedrigviskose Bestandteile wie auch hochviskose Komponenten enthalten, wird jedoch üblicherweise so vorgegangen, daß die Harzlösung zuerst mit der niederviskosen Komponente vermischt und diese Mischung nach Entfernen des aromatischen Lösungsmittels zur hochviskosen Komponente gegeben wird.

Diese Verfahrensweisen zur Herstellung von Organopolysiloxanharz enthaltenden Organopolysiloxanmassen haben die Nachteile, daß mehrere Verfahrensstufen notwendig sind, eine im allgemeinen energie- und zeitintensive Abtrennung des aromatischen Lösungsmittels erforderlich ist, dadurch in der Regel verunreinigtes aromatisches Lösungsmittel anfällt und die Siliconmassen meist noch einen zum Teil hohen Restanteil an aromatischem Lösungsmittel aufweisen.

Des weiteren besteht die Möglichkeit, Organopolysiloxanharz in fester Form einzusetzen. Hierzu werden üblicherweise die bei der Harzherstellung erhaltenen Harzlösungen destillativ vom aromatischen Lösungsmittel weitgehend befreit und dann mit den weiteren Komponenten der Siliconmassen vermischt, was häufig zu Schwierigkeiten bei der Verteilung des Harzes in der Organopolysiloxanmasse führt. Hierzu sei beispielsweise auf US 3,929,704 A (General Electric Co.; ausgegeben am 30. Dezember 1975) verwiesen.

Festes Organopolysiloxanharz wird häufig in Form von Pulvern eingesetzt. Diese können bekannterweise durch Trocknung von Harz lösungen erzeugt werden. Das führt sehr oft zu Harzpulvern mit einem geringen mittleren Teilchendurchmesser und damit mit einem hohen Feinstaubanteil. Hierzu sei beispielsweise auf US 5,302,685 A (Shin-Etsu Chemical Co., Ltd.; ausgegeben am 12. April 1994) verwiesen, wonach Harzpulver durch Trocknung einer toluolischen Harzlösung hergestellt werden. Diese Pulver besitzen zwar einen sehr niedrigen Restlösungsmittelgehalt, jedoch einen mittleren Teilchendurchmesser von < 10 µm und damit einen hohen Feinstaubanteil. In US 5,319,040 A (General Electric Co.; ausgegeben am 7. Juni 1994) werden Harzpulver mit Primärteilchengrößen von 0,1 bis 200 nm und Agglomerate von 10 nm bis 200 µm beschrieben, die durch Sprühtrocknung einer toluolischen Harzlösung hergestellt werden und einen mittleren Teilchendurchmesser von nur 18 µm und folglich einen hohen Feinstaubanteil besitzen.

Ferner wird in EP 535687 A (Wacker-Chemie GmbH; ausgegeben am 7. April 1993) ein Verfahren zur Herstellung von löslichen Harzpulvern durch Fällung eines Harzes mit Wasser beschrieben. Die resultierenden Pulver besitzen jedoch nur einen mittleren Teilchendurchmesser von ca. 20 µm und damit einen hohen Feinstaubanteil.

Pulver mit einem hohen Feinstaubanteil führen jedoch in der Regel zu erheblichen Problemen hinsichtlich Abfüllung, Transport, Förderung, Dosierung oder Pulverbenetzung bei der Einarbeitung. Die mit Staub verbundenen Produktverluste sind ungleichmäßig und schwer kontrollierbar; die Pulverbenetzung bei der Folgeverarbeitung erfolgt ungesteuert, insbesondere entstehen Pulverränder an den Behälterwänden. Weiterhin verursacht Feinstaub einen erhöhten sicherheitstechnischen Aufwand zur Vermeidung oder Beherrschung potentieller Staubexplosionen.

Gegenstand der Erfindung sind Organopolysiloxanharzpulver, die aus R₃SiO_{1/2}- und SiO_{4/2}-Einheiten bestehen mit einem Molverhältnis von M-zu Q-Einheiten im Bereich von 0,5:1 bis 1:1, wobei R die Bedeutung von organischem Rest oder Wasserstoffatom hat, mit einem mittleren Teilchendurchmesser (Medianwert D₅₀) von 70 bis 300 µm, bevorzugt 90 bis 250 µm, und einem Anteil von Harzteilchen, die einen Durchmesser < 45 µm haben, von weniger als 5 Gewichtsprozent, vorzugsweise von weniger als 4 Gewichtsprozent, jeweils bezogen auf das Gesamtgewicht des Organopolysiloxanharzpulvers.

Der mittlere Teilchendurchmesser (Medianwert D₅₀) wird im allgemeinen durch Siebanalyse ermittelt und entspricht dem Korndurchmesser, bei dem jeweils 50 Gewichtsprozent des Pulvers einen größeren bzw. einen kleineren Durchmesser aufweisen. Hierzu sei insbesondere auf Deutsche Industrie Norm DIN 66 141 verwiesen.

Siloxanharzpartikel, die einen Durchmesser < 45 µm haben, sollen im Rahmen dieser Erfindung als "Feinstaub" bezeichnet werden.

Die erfindungsgemäßen Organopolysiloxanharzpulver haben einen Teilchendurchmesser von vorzugsweise höchstens 1000 µm, besonders bevorzugt höchstens 600 µm.

Die erfindungsgemäßen Organopolysiloxanharzpulver haben eine Schüttdichte von vorzugsweise 350 bis 600 kg/m³ und besonders bevorzugt von 430 bis 600 kg/m³.

Die erfindungsgemäßen Organopolysiloxanharzpulver haben einen Gehalt an wasserunlöslichem organischen Lösungsmittel von vorzugsweise weniger als 0,15 Gewichtsprozent, besonders bevorzugt von weniger als 0,1 Gewichtsprozent, jeweils bezogen auf das Gesamtgewicht des Organopolysiloxanharzpulvers.

Unter dem Begriff wasserunlösliche organische Lösungsmittel sollen im Rahmen der vorliegenden Erfindung bei Raumtemperatur und dem Druck der umgebenden Atmosphäre mit Wasser höchstens in Mengen bis zu 1 g/l mischbare Lösungsmittel verstanden werden.

Die erfindungsgemäßen Organopolysiloxanharzpulver haben einen Gehalt an Si-gebundenen Hydroxylgruppen von vorzugsweise weniger als 0,5 Gewichtsprozent, besonders bevorzugt von weniger als 0,45 Gewichtsprozent, jeweils bezogen auf das Gesamtgewicht des Organopolysiloxanharzpulvers.

Bei den erfindungsgemäßen Organopolysiloxanharzpulvern handelt es sich hauptsächlich um Teilchen mit Hohlkugelstruktur.

Bei den erfindungsgemäßen Organopolysiloxanharzpulvern handelt es sich bevorzugt um solche bestehend aus R₃SiO_{1/2}-(M), und SiO_{4/2}- (Q) Einheiten, wobei R gleich oder verschieden sein kann und die Bedeutung von organischem Rest und Wasserstoffatom hat und das Molverhältnis von M- zu Q-Einheiten im Bereich von 0,5:1 bis 1:1 liegt.

Bevorzugt hat R die Bedeutung von einwertigem Kohlenwasserstoffrest mit 1 bis 18 Kohlenstoffatomen und Wasserstoffatom, insbesondere von Methyl- und Vinylrest sowie Wasserstoffatom.

Es handelt sich bei den erfindungsgemäßen Organopolysiloxanharzpulvern um MQ-Harzpulver, d.h. solche bestehend aus R₃SiO_{1/2}- und SiO_{4/2}-Einheiten mit einem Molverhältnis von M- zu Q-Einheiten im Bereich von 0,5:1 bis 1:1, wobei R gleich die obengenannte Bedeutung hat.

Vorzugsweise werden die erfindungsgemäßen Organopolysiloxanharzpulver durch Sprühtrocknung unter Inertgas aus Harzlösungen hergestellt. Dieser Sprühtrocknungsprozess beinhaltet die Erzeugung eines Primärkorns durch Verdüsung in Kombination mit einer Agglomeration, Sichtung und Nachtrocknung.

Ein weiterer Gegenstand der Erfindung ist ein Verfahren zur Herstellung von Organopolysiloxanharzpulver mit einem mittleren Teilchendurchmesser (Medianwert D₅₀) von 70 bis 300 µm und einem Anteil von Harzteilchen, die einen Durchmesser < 45 µm haben, von weniger als 5 Gewichtsprozent, bezogen auf das Gesamtgewicht des Organopolysiloxanharzpulvers, durch Sprühtrocknung von Organopolysiloxanharzlösungen, dadurch gekennzeichnet, daß eine Lösung von bei Raumtemperatur festem Organopolysiloxanharz in organischem Lösungsmittel bei einer Temperatur von 0 bis 100°C und einem Druck von 1 000 bis 30 000 hPa mittels einer Druckdüse am Kopf eines Sprühturmes verdüst wird und die erzeugten Flüssigkeitströpfchen durch das im Gleichstrom geführte Inertgas, welches eine Eintrittstemperatur von 100 bis 300°C hat, getrocknet werden sowie aus den so erhaltenen Harzteilchen am Boden des Sprühturmes mit einem weiteren Inertgasstrom, welcher mit einer Eintrittstemperatur von 50 bis 250°C von unten in den Trockenturm geleitet wird, eine Wirbelschicht erzeugt wird, wodurch das Harzpulver nachgetrocknet und durch Sichtung von Feinstaub befreit wird, wobei der so abgetrennte Feinstaub im oberen Teil des Sprühturmes und das erfindungsgemäße Harzpulver am unteren Ende des Sprühturmes ausgetragen wird.

Vorzugsweise wird der durch Sichtung abgetrennte Feinstaub im Sprühkegel mit Primärkorn agglomeriert oder am oberen Ende des Sprühturmes mit dem Inertgasstrom ausgetragen, wobei der ausgetragene Feinstaub von Inertgas getrennt wird, bevorzugt mittels eines Cyclons oder Filters, und in die Agglomerationszone, d.h. in den Sprühkegel rückgeführt wird.

Das mit organischem Lösungsmittel beladene Inertgas, welches bevorzugt eine Temperatur von 50 bis 220°C, besonders bevorzugt 80 bis 160°C, aufweist, wird vorzugsweise durch Abkühlung, bevorzugt mittels Kondensator oder Wäscher, vom Lösungsmittel befreit und vorzugsweise nach vorheriger Erwärmung in den Sprühturm rückgeführt. Organisches Lösungsmittel wird dabei in großer Reinheit wiedergewonnen und wird bevorzugt direkt und ohne Nachbehandlung wieder zur Herstellung der Organopolysiloxanharzlösungen eingesetzt.

Der Produktaustrag am unteren Ende des Sprühturmes erfolgt mittels Austragseinrichtungen, wie vorzugsweise Klappenschleusen.

Als Inertgas sollen im Rahmen des erfindungsgemäßen Verfahrens gasförmige Stoffe verstanden werden, die gegenüber dem Organopolysiloxanharz und dem organischen Lösungsmittel inert sind. Beispiele hierfür sind Stickstoff, Argon, Helium und CO₂, wobei Stickstoff besonders bevorzugt ist.

Eine bevorzugte Ausführungsform des erfindungsgemäßen Verfahrens besteht darin, daß eine Lösung von bei Raumtemperatur festem Organopolysiloxanharz in organischem Lösungsmittel bei einer Temperatur von 20 bis 60°C und einem Druck von 10 000 bis 20 000 hPa mittels einer Einstoffdruckdüse am Kopf eines Sprühturmes verdüst wird und die erzeugten Flüssigkeitströpfchen durch den im Gleichstrom geführten Stickstoffstrom, welcher eine Eintrittstemperatur von 150 bis 250°C hat, getrocknet werden sowie aus den so erhaltenen Harzteilchen am Boden des Sprühturmes mit einem weiteren Stickstoffstrom, welcher mit einer Eintrittstemperatur von 100 bis 200°C von unten in den Trockenturm geleitet wird, eine Wirbelschicht erzeugt wird, wodurch das Harzpulver nachgetrocknet und durch Sichtung von Feinstaub befreit wird, wobei der so abgetrennte Feinstaub im oberen Teil des Sprühturmes und das erfindungsgemäße Harzpulver am unteren Ende des Sprühturms ausgetragen wird.

Bei den im erfindungsgemäßen Verfahren eingesetzten Lösungen von Organopolysiloxanharz in organischem Lösungsmittel kann es sich um bisher bekannte Harzlösungen handeln.

Vorzugsweise handelt es sich bei den erfindungsgemäß eingesetzten Harzlösungen um solche gemäß WO 93/23455 (Wacker-Chemie GmbH; ausgegeben am 25. November 1993), die dadurch hergestellt werden, daß
in einer 1. Stufe
mindestens ein Silan der Formel

R₃SiOR¹ (I)

und/oder dessen Hydrolysat R₃SiOSiR₃, wobei
- R: gleich oder verschieden sein kann und einwertiger organischer Rest bedeutet und
- R¹: einen Alkylrest bedeutet,
und mindestens ein Silan der Formel

Si(OR²)₄ (II)

und/oder dessen Teilhydrolysat, wobei
- R²: gleich oder verschieden sein kann und Alkylrest bedeutet,
sowie gegebenenfalls Organosiliciumverbindung, ausgewählt aus der Gruppe bestehend aus Silanen der Formel

R³ ₐSi(OR⁴)₄₋ₐ (III)

und/oder deren Teilhydrolysate, wobei
- a: 1 oder 2 ist,
- R³: gleich oder verschieden sein kann und einwertiger organischer Rest bedeutet und
- R⁴: gleich oder verschieden sein kann und Alkylrest bedeutet, und
Organo(poly)siloxane der Formel

(R⁵ ₂SiO)_{b} (IV),

wobei
- R⁵: gleich oder verschieden sein kann und einen einwertigen organischen Rest bedeutet und
- b: eine ganze Zahl im Wert von 3 bis 8 ist,
sowie deren Gemische,
mit Wasser in Gegenwart von Säure umgesetzt wird, wobei der entstandene Alkohol zumindest zum Teil abdestilliert wird,
in einer 2. Stufe die in der 1. Stufe erhaltene homogene Reaktionsmasse in Anwesenheit von Base sowie mindestens einer solchen Menge an wasserunlöslichem organischen Lösungsmittel, die zur Erhaltung einer homogenen Reaktionsmasse ausreicht, umgesetzt wird und Wasser sowie Alkohol destillativ entfernt werden,
in einer 3. Stufe die in der 2. Stufe erhaltene homogene Reaktionsmasse mit Säure neutralisiert wird, gegebenenfalls noch vorhandenes Wasser und Alkohol abdestilliert wird und das aus der Neutralisation entstandene, ausgefallene Salz entfernt wird sowie
gegebenenfalls in einer 4. Stufe die in der 3. Stufe erhaltene homogene Reaktionsmasse von wasserunlöslichem organischen Lösungsmittel zum Teil befreit wird.

Besonders bevorzugt handelt es sich bei den erfindungsgemäß eingesetzten Harzlösungen um solche, die dadurch hergestellt werden, daß Hexamethyldisiloxan und/oder Trimethylethoxysilan gegebenenfalls im Gemisch mit 1,3-Divinyltetramethyldisiloxan und/oder Vinyldimethylethoxysilan und Tetraethoxysilan und/oder dessen Teilhydrolysat
in einer 1. Stufe
mit Wasser und 0,2 bis 50 mmol Säure, bezogen auf 1000 g der Reaktionsmasse der 1. Stufe vor der Destillation, vermischt wird, bei der Siedetemperatur der Reaktionsmasse und einem Druck zwischen 900 und 1100 hPa umgesetzt wird und entstandenes Ethanol abdestilliert wird,
in einer 2. Stufe
die in der 1. Stufe erhaltene homogene Reaktionsmasse in Anwesenheit von Base, ausgewählt aus der Gruppe bestehend aus Natriumhydroxid, Kaliumhydroxid und Methylamin, und einem wasserunlöslichen organischen Lösungsmittel, insbesondere Toluol oder Xylol, bei der Siedetemperatur der Reaktionsmasse und einem Druck zwischen 900 und 1100 hPa umgesetzt wird, wobei Wasser sowie Ethanol vollständig bzw. nahezu vollständig abdestilliert wird, und
in einer 3. Stufe
die in der 2. Stufe erhaltene homogene Reaktionsmasse mit Säure neutralisiert wird, gegebenenfalls Wasser und Ethanol vollständig abdestilliert wird und das bei der Neutralisation entstandene, ausgefallene Salz abfiltriert wird.

Die bei dem erfindungsgemäßen Verfahren eingesetzte Lösung von Organopolysiloxanharz in organischem Lösungsmittel hat einen Harzgehalt von vorzugsweise 30 bis 80 Gewichtsprozent, besonders bevorzugt 50 bis 75 Gewichtsprozent, jeweils bezogen auf das Gesamtgewicht der Harzlösung.

Das erfindungsgemäße Verfahren hat den Vorteil, daß Organopolysiloxanharzpulver mit keinem oder nur einem geringen Anteil an Feinstaub erhalten werden.

Des weiteren hat das erfindungsgemäße Verfahren den Vorteil, daß Harzpulver erhalten werden, bei denen trotz der hohen Teilchengröße die einzelnen Harzpartikel eine regelmäßige Kugelstruktur aufweisen, woraus sich ausgezeichnte Fließ-, und Fördereigenschaften ergeben.

Das erfindungsgemäße Verfahren hat den Vorteil, daß trotz der hohen Teilchengröße insbesondere durch die Nachtrocknung im Wirbelbett Organopolysiloxanharzpulver mit keinem oder einem sehr niedrigen Gehalt an wasserunlöslichem organischen Lösungsmittel erhalten werden.

Des weiteren hat das erfindungsgemäße Verfahren den Vorteil, daß das Organopolysiloxanharz während des Trocknungsprozesses chemisch nicht verändert wird.

Das erfindungsgemäße Verfahren hat den Vorteil, daß praktisch keine Produktverluste auftreten, wenn der abgetrennte Feinstaub in die Agglomerationszone rückgeführt wird.

Die erfindungsgemäßen bzw. erfindungsgemäß hergestellten Organopolysiloxanharzpulver haben den Vorteil, daß sie sich mit einer sehr hohen Lösungsgeschwindigkeit in organischen Lösungsmitteln und in flüssigen Organosiliciumverbindungen, vor allem auch solchen mit höherer Viskosität, insbesondere vollständig, lösen.

Die erfindungsgemäßen bzw. erfindungsgemäß hergestellten Organopolysiloxanharzpulver eignen sich für alle Anwendungszwecke, für die auch bisher Organopolysiloxanharze eingesetzt werden konnten. Insbesondere eignen sie sich zur Herstellung von Organopolysiloxanharz enthaltende Organopolysiloxanzusammensetzungen.

Ein weiterer Gegenstand der vorliegenden Erfindung ist ein Verfahren zur Herstellung von Organopolysiloxanzusammensetzungen, dadurch gekennzeichnet, daß erfindungsgemäßes Organopolysiloxanharzpulver mit Organosiliciumverbindung sowie gegebenenfalls weiteren Komponenten vermischt wird.

Bei der Organosiliciumverbindung, mit der das erfindungsgemäße Harzpulver vermischt wird, handelt es sich bevorzugt um Organopolysiloxane mit einer Viskosität von 10 bis 50·10⁶ mm²/s bei 25°C, wie z.B. a,w-Dihydroxypolydimethylsiloxane, α,ω-Trimethylsiloxypolydimethylsiloxane, α,ω-Divinylpolydimethylsiloxane, α,ω-Divinylpoly(dimethyl/methylvinyl)siloxane, α,ω-Trimethylsiloxypoly(dimethyl/methylvinyl)siloxane, α,ω-Dihydrogenpolydimethylsiloxane, α,ω-Dihydrogenpoly(dimethyl/methylH)siloxane und α,ω-Trimethylsiloxypoly(dimethyl/methylH)siloxane.

Vorzugsweise werden dabei Mischungen erhalten, in denen das erfindungsgemäße Organopolysiloxanharz molekulardispers gelöst ist.

Beispiele für Organopolysiloxanzusammensetzungen, die nach dem erfindungsgemäßen Verfahren hergestellt werden können, sind zu Elastomeren härtbare Massen auf Basis von Diorganopolysiloxanen, wie RTV- und heißvernetzende Siliconkautschukmassen, additionsvernetzende, kondensationsvernetzende sowie peroxidisch vernetzende Ein- und Zwei-Komponenten-Siliconkautschukmassen. Weitere Beispiele für derartige Massen sind Einbettungsmassen für Elektronikbauteile, Beschichtungen für den Selbstklebesektor, Trennmittel, Antischaummittel, Schaumstabilisatoren, Körperpflegemittel und wasserabweisenden Imprägniermittel. Organopolysiloxanharz enthaltende Organopolysiloxanzusammensetzungen sind weitreichend bekannt. Beispielhaft soll auf US-A 3,528,940, EP-A 393 426, US-A 4,871,795 bzw. die entsprechende DE-A 38 12 415, US-A 4,490,500, GB-A 1 055 777, WO 93/19122, EP-A 108 208 und EP-B 312 949 verwiesen werden.

Bei dem im erfindungsgemäßen Verfahren eingesetzten Harzpulver handelt es sich bevorzugt um erfindungsgemäße MQ-Harzpulver.

Die erfindungsgemäßen Organopolysiloxanharzpulver können mit allen Siliconrohstoffen, Füllstoffen, Katalysatoren und Zusatzstoffen vermischt werden, die auch bisher zur Herstellung von bekannten, Siliconharz enthaltenden Organopolysiloxanzusammensetzungen verwendet werden.

Bei dem erfindungsgemäßen Verfahren zur Herstellung von Organopolysiloxanzusammensetzungen kann das erfindungsgemäß eingesetzte Organopolysiloxanharzpulver mit den übrigen Bestandteilen auf beliebige Art und Weise vermischt werden. Vorzugsweise wird das erfindungsgemäße Harzpulver in der Organosiliciumverbindung gelöst und dann mit den restlichen Komponenten vermischt.

Insbesondere aufgrund der ausgezeichneten Löslichkeit der erfindungsgemäßen Organopolysiloxanharzpulver können zur erfindungsgemäßen Herstellung der harzhaltigen Organopolysiloxanzusammensetzungen alle Mischeinrichtungen verwendet werden, die auch schon bisher zu diesem Zweck eingesetzt werden. Dazu gehören unter anderem Rührwerke mit herkömml.ichen Rührorganen, Kneter, wie Mulden- und Doppelmuldenkneter, Einschnecken- und Zweischneckenkneter, Einwellen- und Doppelwellenkneter, Kippkneter, Schaufelmischer, Innenmischer, Walzwerke, Homogenisier- und Dispergiermaschinen nach dem Rotor-Stator-Prinzip, Ein- und Doppelschneckenextruder sowie Roots-Pumpwerkzeuge.

Je nach verwendeter Mischeinrichtung kann das erfindungsgemäße Verfahren zur Herstellung der harzhaltigen Organopolysiloxanzusammensetzungen kontinuierlich oder diskontinuierlich durchgeführt werden.

Bei dem erfindungsgemäßen Verfahren zur Herstellung von Organopolysiloxanzusammensetzungen wird das Mischen der einzelnen Komponenten vorzugsweise bei einem Druck zwischen 900 und 1100 hPa und einer Temperatur von 0 bis 250°C durchgeführt. Soll bei dem erfindungsgemäßen Verfahren Organopolysiloxanharz in hochviskoser Organosiliciumverbindung, d.h. Organosiliciumverbindung mit einer Viskosität von vorzugsweise 10 000 bis 50·10⁶ mm²/s bei 25°C, gelöst werden, wird dies besonders bevorzugt bei 900 bis 1100 hPa und einer Temperatur von 50 bis 200°C durchgeführt.

Das erfindungsgemäße Verfahren hat den Vorteil, daß auf sehr einfache Art und Weise und in sehr kurzer Zeit vollständig gelöstes Organopolysiloxanharz enthaltende Organopolysiloxanmassen, lediglich durch Mischen mit großer Wirtschaftlichkeit und hoher Flexibilität hergestellt werden können.

Des weiteren hat das erfindungsgemäße Verfahren den Vorteil, daß Organopolysiloxanmassen erhalten werden, die Siloxanharzpulver vollständig molekulardispers gelöst ohne Rückstände an festen, ungelösten Siloxanharzpartikeln enthalten. Die vollständige Löslichkeit ist insbesondere bei hochviskosen Siloxanmassen von Vorteil, da diese nicht mehr filtriert werden können.

Ferner ist es bei vielen der erfindungsgemäß hergestellten Organopolysiloxanmassen von Vorteil, daß die erfindungsgemäßen Organopolysiloxanharzpulver keinen oder nur einen sehr geringen Restlösungsmittelanteil sowie keinen oder nur einen geringen Anteil Si-gebundener Hydroxylgruppen aufweisen.

Die erfindungsgemäßen Organopolysiloxanharzpulver können selbstverständlich auch wieder in organischem Lösungsmittel gelöst werden. Dadurch können auf sehr einfache Weise Organopolysiloxanharzlösungen mit einer gewünschten Konzentration auch in einem Lösungsmittel hergestellt werden, in dem die Harzsynthese nicht durchgeführt werden kann bzw. üblicherweise nicht durchgeführt wird. Beispiele für solche Lösungsmittel sind Lösungsmittel, die im alkalischen Bereich nicht beständig sind, wie Ester, wie z.B. Dioctyladipat und Dioctylphthalat.

In den nachfolgenden Beispielen beziehen sich alle Angaben von Teilen und Prozentsätzen, soweit nichts anderes angegeben ist, auf das Gewicht. Sofern nicht anders angegeben, werden die nachstehenden Beispiele bei einem Druck der umgebenden Atmosphäre, also etwa bei 1000 hPa, und bei Raumtemperatur also bei etwa 20°C bzw. bei einer Temperatur, die sich beim Zusammengeben der Reaktanden bei Raumtemperatur ohne zusätzliche Heizung oder Kühlung einstellt, durchgeführt. Alle in den Beispielen angeführten Viskositätsangaben sollen sich auf eine Temperatur von 25°C beziehen.

Die mittleren Teilchendurchmesser (D₅₀-Wert) werden wie folgt ermittelt: Der Siebrückstand auf dem Prüfsieb mit Drahtsiebböden nach DIN 4188, Teil 1 durch Hand- oder Maschinensiebung gemäß DIN 1164, Teil 4 wird durch Wägung mengenmäßig erfaßt. Die Auswahl der Prüfkorngrößen erfolgt nach DIN 66100. Die Auswertung der Siebanalysen und Bestimmung des Medianwertes wird entsprechend DIN 66141 durchgeführt.

Die Bestimmung der Mindestzündenergie mit Induktivität erfolgt in einer modifizierten Hartmann-Apparatur. Dabei handelt es sich um ein senkrecht stehendes, oben offenes Rohr aus durchsichtigem Kunststoff mit einem Volumen von 1,3 l. Die Pulverprobe wird auf dem Boden aufgehäuft und durch einen Luftstoß in Schwebe gebracht. Als Zündquelle dient die Funkenentladung eines Hochspannungskondensators (U= 6 - 10 kV, C= 20 pF bis 0,1 µF, E= 0,2 mJ bis 5 J) über eine Dreielektroden-Funkenstrecke, die im oberen Drittel des Rohres angeordnet ist. Die Funkenentladung wird über die dritte, sogenannte Hilfselektrode mittels eines Hilfsfunkens (E= 0,2 mJ) zu einem definierten Zeitpunkt ausgelöst. Die Funkendauer zwischen den beiden Hauptelektroden (Abstand 4-6 mm) wird neben der Kapazität durch eine Induktivität von ca. 0,9 mH im Hauptentladekreis bestimmt. Die Beurteilung des Zündverhaltens erfolgt visuell. Als Zündung werden solche Reaktionen gewertet, bei denen das gesamte Volumen des Rohrs mit Flamme erfüllt ist. Die Zündenergie wird, ausgehend von einem Energiebetrag, bei dem eine Zündung zu erwarten ist, so lange schrittweise verringert, bis bei zwanzig aufeinanderfolgenden Versuchen unabhängig von der Staubkonzentration keine Zündung mehr erzielt wird. Die Mindestzünaenergie Eₘᵢₙ liegt damit zwischen der höchsten Energie E₁, bei der keine Zündungen mehr auftreten und der niedrigsten Energie E₂, bei der noch Zündungen auftreten. Für die Mindestzündenergie Eₘᵢₙ gilt: E₁ < Eₘᵢₙ < E₂.

Die Jodzahl ist die Zahl, die angibt, wieviel g Jod von 100 g untersuchter Substanz gebunden werden.

In den folgenden Beispielen werden Shore-A-Härte nach DIN (Deutsche Industrie Norm) 53 505-87, die Reißfestigkeit, die Reißdehnung sowie das Modul (Zugfestigkeit nach 100 % Dehnung) jeweils nach DIN 53504-85S1 und die Weiterreißfestigkeit nach ASTM D624B-73, Form B bestimmt.

### Beispiel 1

Eine 70 %ige toluolische Lösung eines MQ-Harzes bestehend aus (CH₃)₃SiO_{1/2}- und SiO_{4/2}-Einheiten im Molverhältnis 0,65 : 1 wird nach dem in WO 93/23455 beschriebenen Verfahren hergestellt. Daten über die Harzlösung V_{A} finden sich in Tabelle 1.

Diese Harzlösung wird mittels einer Einstoffdruckdüse (Nozzle-Head-Typ: ST 1278-SS, Orifice Insert Typ: SIT 55, Core Typ: SIT 68 der Firma Spraying-Systems Deutschland GmbH, Hamburg) bei einem Vordruck von 17 000 hPa in einem konischen Sprühtrockenturm (Gesamthöhe: 3,8 m; Höhe bis zum Konus: 2 m, Innendurchmesser: 2 m, Innendurchmesser am unteren Ende: 0,25 m; Innenvolumen 8,3 m³) bei einem Speisedurchsatz von 40 kg/Stunde im Stickstoffstrom (625 kg/Stunde; Eintrittstemperatur 190°C) verdüst. Das so entstandene Harzpulver bildet mit dem Stickstoffstrom, der am unteren Ende des Turmes eingeleitet wird (120 kg/Stunde; Eintrittstemperatur: 160°C), ein Wirbelbett, wobei die Harzteilchen nachgetrocknet werden. Gleichzeitig wird Feinstaub am oberen Ende des Turmes von dem mit Toluol beladenen Trocknungsgas mit einer Austrittstemperatur von 120°C ausgetragen, in einem Jetfilter von Inertgas abgetrennt und pneumatisch mittels Stickstoff in den Sprühkegel der Druckdüse zurückgefördert, wo die Agglomeration an feuchte Primärteilchen stattfindet. Durch Rückführung des Feinstaubanteils wird ein Produktverlust vermieden. Der Pulveraustrag erfolgt kontinuierlich aus der Wirbelschicht am unteren Ende des Trockenturmes mittels Überlaufwehr und Doppelklappenschleuse. Das mit Toluol beladene Trocknungsgas wird in einem Naßwäscher (Gasaustrittstemperatur: -8°C) von Toluol befreit und nach vorherigem Aufheizen auf 190°C wieder in den Prozess zurückgeführt. Auf diese Weise wird Toluol vollständig rückgewonnen und kann wieder zur Harzsynthese eingesetzt werden.

Das so erhaltene rieselfähige Harzpulver A hat einen mittleren Teilchendurchmesser (D₅₀-Wert) von 190 µm, eine Schüttdichte von 510 kg/m³ und einen mittleren Toluolgehalt von 0,09 %, bezogen auf das Gewicht des Harzpulvers. Der Toluolgehalt wird durch Trocknung einer Probe bei 105°C über einen Zeitraum von 2 Stunden bestimmt.

Die Mindestzündenergie mit Induktivität liegt zwischen 25 und 50 mJ.

Mittels Siebanalyse wird die Korngrößenverteilung wie folgt ermittelt:

| **Harzpulver A** | | | | | | | | |
|---|---|---|---|---|---|---|---|---|
| Fraktion [µm] | <500 | <355 | <250 | <180 | <125 | <90 | <63 | <45 |
| Kornanteil [%] | 98,8 | 96 | 71 | 47 | 21 | 12 | 3 | 0,1 |

Harzpulver A direkt nach dem Trocknungsprozess sowie nach einem Jahr Lagerung werden jeweils im Gewichtsverhältnis 1:1 in Toluol gelöst und die erhaltenen Lösungen charakterisiert. Die Daten finden sich in Tabelle 1.

### Beispiel 2

Die in Beispiel 1 beschriebene Verfahrensweise wird wiederholt mit der Abänderung, daß anstelle der Harzlösung V_{A} eine 70 %ige toluolische Lösung eines MQ-Harzes bestehend aus (CH₃)₃SiO_{1/2}-, (CH₃)₂(CH₂=CH)SiO_{1/2}- und SiO_{4/2}-Einheiten im Molverhältnis 0,70 : 0,10 : 1, welche ebenfalls nach dem in WO 93/23455 beschriebenen Verfahren hergestellt wird, eingesetzt. Daten über die Harzlösung V_{B} finden sich in Tabelle 1.

Das so erhaltene rieselfähige Harzpulver B hat einen mittleren Teilchendurchmesser (D₅₀-Wert) von 155 µm, eine Schüttdichte von 460 kg/m³ und einen mittleren Toluolgehalt von 0,07 %, bezogen auf das Gewicht des Harzpulvers. Der Toluolgehalt wird durch Trocknung einer Probe bei 105°C über einen Zeitraum von 2 Stunden bestimmt.

Die Mindestzündenergie mit Induktivität liegt zwischen 13 und 25 mJ.

Mittels Siebanalyse wird die Korngrößenverteilung wie folgt ermittelt:

| **Harzpulver B** | | | | | | | | |
|---|---|---|---|---|---|---|---|---|
| Fraktion [µm] | <500 | <355 | <250 | <180 | <125 | <90 | <63 | <45 |
| Kornanteil [%] | 100 | 99,4 | 89 | 62 | 35 | 18 | 6 | 2 |

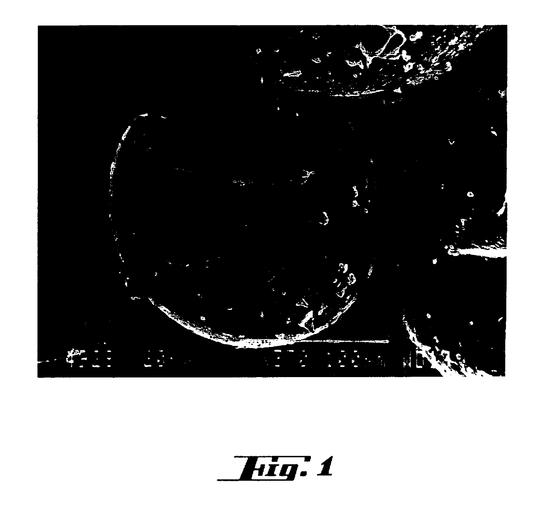

Figur 1 zeigt die rasterelektronenmikroskopische Aufnahme von Harzpulver B (Vergrößerung: 370-fach)

Harzpulver B direkt nach dem Trocknungsprozess sowie nach einem Jahr Lagerung werden jeweils im Gewichtsverhältnis 1:1 in Toluol gelöst und die erhaltenen Lösungen charakterisiert. Die Daten finden sich in Tabelle 1.

**Tabelle 1**

| | Viskosität [mm²/s] | Gehalt an Si-gebundenen Hydroxylgruppen [%] | Jodzahl |
|---|---|---|---|
| Harzlösung V_{A}¹⁾ | 3,94 | 0,17 | - |
| Harzlösung V_{B}¹⁾ | 3,04 | 0,20 | 9,2 |
| Harzpulver A²⁾ | 3,92 | 0,17 | - |
| Harzpulver B²⁾ | 3,05 | 0,21 | 9,2 |
| Harzpulver A³⁾ | 3,95 | 0,16 | - |
| Harzpulver B³⁾ | 3,03 | 0,19 | 9,1 |

| | | | |
|---|---|---|---|
| 1) Die 70 %ige Harzlösung wird mit Toluol auf einen Harzanteil von 50 % verdünnt und dann analysiert. | | | |
| 2) Das Harzpulver wird gleich nach der Trocknung im Verhältnis 1:1 in Toluol gelöst und dann analysiert. | | | |
| 3) Das Harzpulver wird nach 1-jähriger Lagerung im Verhältnis 1:1 in Toluol gelöst und dann analysiert. | | | |

### Vergleichsbeispiel 1

Nach dem in der oben diskutierten EP 535 687 A beschriebenen Verfahren wird ein Harzpulver bestehend aus (CH₃)₃SiO_{1/2}-und SiO_{4/2}-Einheiten im Molverhältnis 0,65 : 1 hergestellt.

Das Harzpulver V_{C} hat einen mittleren Teilchendurchmesser (D₅₀-Wert) von 11 µm, eine Schüttdichte von 410 kg/m³ und einen mittleren Restlösungsmittelgehalt, d.h. Wasser und Tetrahydrofuran, von 0,6 %, bezogen auf das Gewicht des Harzpulvers. Der Restlösungsmittelgehalt wird durch Trocknung einer Probe bei 150°C über einen Zeitraum von 2 Stunden bestimmt.

Die Mindestzündenergie mit Induktivität liegt bei weniger als 1 mJ.

Mittels Siebanalyse wird die Korngrößenverteilung wie folgt ermittelt:

| **Harzpulver V**_{**C**} | | | | | |
|---|---|---|---|---|---|
| Fraktion [µm] | <125 | <71 | <63 | <32 | <20 |
| Kornanteil [%] | 97 | 88 | 87 | 82 | 72 |

### Beispiel 3

Das in Beispiel 1 hergestellte Harzpulver A sowie das in Vergleichsbeispiel 1 beschriebene Harzpulver V_{C} wird nun jeweils in technischem Maßstab abgefüllt, gelagert, gefördert und dosiert. Schüttgutdaten des erfindungsgemäßen Harzpulvers A im Vergleich mit Harzpulver V_{C} sind in Tabelle 2 aufgeführt.

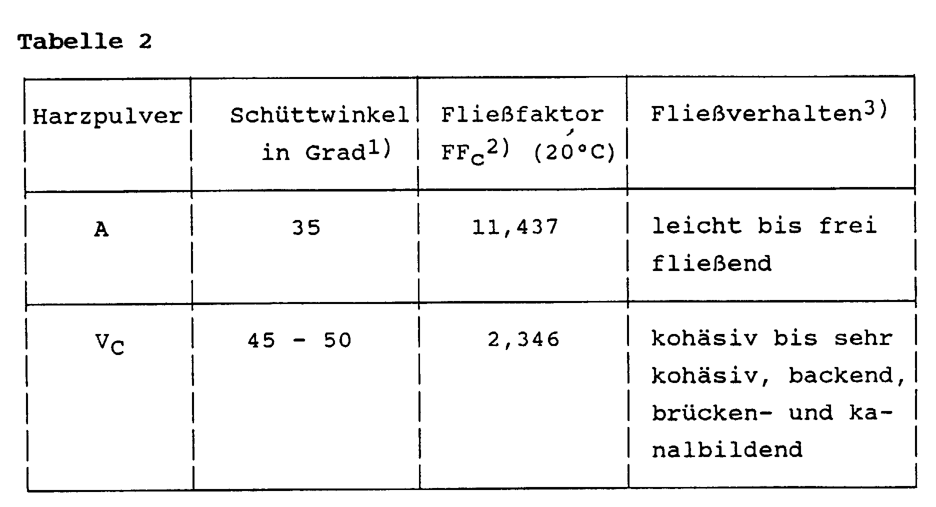

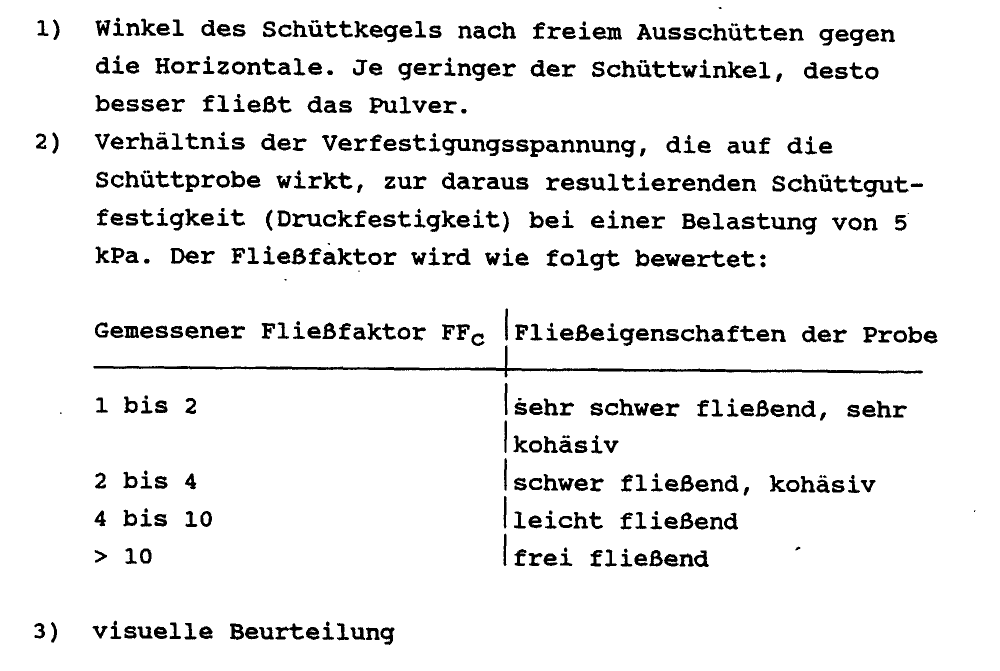

Unter Berücksichtigung des sehr geringen Feinstaubanteils des erfindungsgemäßen Harzpulvers A ergeben sich hinsichtlich des Abfüll-, Lager-, Förder- und Dosierverhaltens die folgenden Konsequenzen:

### Abfüllung

Im Gegensatz zu Harzpulver V_{C} kann Harzpulver A in einer Freifallabsackanlage abgefüllt werden (ermittelte Parameter: 1200 kg pro Stunde Durchsatz, Dosierzeit 40 Sekunden, Füllgrad 85 % für 20 kg-Sack).

### Lagerung

Harzpulver A kann mit herkömmlichen Austragseinrichtungen, wie Zellenradschleusen, entnommen werden.

### Förderung

Aufgrund des hohen Feinstaubanteils führt Harzpulver V_{C} im Gegensatz zu Harzpulver A zu Wandbelägen und damit zu einer höheren Verstopfungsgefahr in Rohrleitungen bei der pneumatischen Förderung.

### Dosierung

Im Gegensatz zu Harzpulver A verhält sich Harzpulver V_{C} im ruhenden Zustand brückenbildend und im bewegten Zustand schießend, was einen großen Aufwand bei der Feindosierung erfordert.

### Beispiel 4

Jeweils eine definierte Menge m₁ eines
a) isoparaffinischen Kohlenwasserstoffgemischs mit einer Viskosität von 1,53 mPas (käuflich erhältlich unter der Bezeichnung "Isopar L" bei Fa. Silbermann, Gablingen),
b) Dioctyladipats mit einer Viskosität von 14 mm²/s (käuflich erhältlich bei Hüls AG, Marl),
c/d) α,ω-Divinylpolydimethylsiloxans mit einer Viskosität von 510 mm²/s,
e) α,ω-Divinylpolydimethylsiloxans mit einer Viskosität von 20 000 mm²/s und
f) α,ω-Divinylpolydimethylsiloxans mit einer Viskosität von 96 400 mm²/s
wird in einem 1000 ml-Glaskolben mit Glasflügelrührer vorgelegt und unter Rühren (750 Umdrehungen pro Minute) auf eine Temperatur T₁ erwärmt. Anschließend wird eine definierte Menge m₂ von Harzpulver A, dessen Herstellung in Beispiel 1 beschrieben ist, oder von Harzpulver B, dessen Herstellung in Beispiel 2 beschrieben ist, in einer bestimmten Zeit t₁ unter Rühren zudosiert. Die Mischung wird dann bei der genannten Temperatur bis zum Erhalt einer vollständig homogenen Mischung weitergerührt, wobei die dazu benötigte Zeit t₂ bestimmt wird.

Die Viskosität der erhaltenen Mischungen wird gleich nach der Herstellung ν₁ sowie nach 4-wöchiger Lagerung bei 25 °C ν₂ bestimmt.

In allen Fällen liegt eine transparente Mischung vor, in der sich das Harz vollständig, ohne Rückstände von Partikel gelöst hat.

Die Ergebnisse finden sich in Tabelle 3.

**Tabelle 3**

| Beispiel | Harzpulver | m₁ [g] | m₂ [g] | t₁ [min] | T₁ [°C] | t₂ [min] | ν₁ [mm²/s] | ν₂ [mm²/s] |
|---|---|---|---|---|---|---|---|---|
| 4a | A | 350 | 350 | 2 | 25 | 15 | 22,3 | 22,2 |
| 4b | A | 350 | 350 | 2 | 60 | 15 | 304 | 303 |
| 4c | B | 300 | 200 | 1,5 | 100 | 15 | 2590 | 2595 |
| 4d | A | 300 | 200 | 1,5 | 100 | 45 | 12050 | 12070 |
| 4e | B | 300 | 200 | 2 | 120 | 15 | 26200 | 26195 |
| 4f | B | 300 | 200 | 7 | 120 | 25 | 76125 | 76300 |
| V2a | V_{D} | 300 | 200 | 2 | 120 | 15 | 26250 | 26255 |
| V2b | V_{D} | 300 | 200 | 7 | 120 | 23 | 76140 | 76160 |

### Vergleichsbeispiel 2

Die in Beispiel 4 beschriebene Verfahrensweise wird wiederholt mit der Abänderung, daß anstelle von Harzpulver A oder B Harzpulver V_{D} eingesetzt wird sowie dieses vermischt wird mit
a) α,ω-Divinylpolydimethylsiloxan mit einer Viskosität von 20 000 mm²/s und
b) α,ω-Divinylpolydimethylsiloxan mit einer Viskosität von 96 400 mm²/s.

Harzpulver V_{D} ist der bei der Herstellung von Harzpulver B gemäß Beispiel 2 mit dem Stickstoffstrom ausgetragene und mittels Cyclon abgetrennte Feinstaub. Nach einer rasterelektronischen Untersuchung hat Harzpulver V_{D} eine maximale Teilchengröße von 50 µm.

In beiden Fällen liegt eine transparente Mischung vor, in der sich das Harz vollständig, ohne Rückstände von Partikel gelöst hat.

Die Ergebnisse finden sich in Tabelle 3.

### Beispiel 5

Die in Beispiel 4 beschriebene Verfahrensweise wird wiederholt mit der Abänderung, daß Harzpulver A oder B zu
a) α,ω-Trimethylsiloxypolydimethylsiloxan mit einer Viskosität von 245 mm²/s,
b/c) a,w-Trimethylsiloxypolydimethylsiloxan mit einer Viskosität von 101 000 mm²/s und
d/e) α,ω-Dihydroxypolydimethylsiloxan mit einer Viskosität von 76 800 mm²/s,
dosiert wird.

In allen Fällen liegt eine transparente Mischung vor, in der sich das Harz vollständig, ohne Rückstände von Partikel gelöst hat.

Die Ergebnisse finden sich in Tabelle 4.

**Tabelle 4**

| Beispiel | Harzpulver | m₁ [g] | m₂ [g] | t₁ [min] | T₁ [°C] | t₂ [min] | ν₁ [mm²/s] | ν₂ [mm²/s] |
|---|---|---|---|---|---|---|---|---|
| 5a | A | 300 | 200 | 1,5 | 100 | 20 | 5840 | 5860 |
| 5b | B | 300 | 200 | 6,5 | 120 | 30 | 62000 | 62300 |
| 5c | B¹⁾ | 300 | 200 | 6,5 | 120 | 30 | 61970 | 62050 |
| 5d | A | 350 | 150 | 4 | 150 | 30 | 81500 | - |
| 5e | B | 300 | 200 | 6,5 | 120 | 30 | 71600 | - |

| | | | | | | | | |
|---|---|---|---|---|---|---|---|---|
| 1) nach 1-jähriger Lagerung des Pulvers bei 25°C | | | | | | | | |

### Vergleichsbeispiel 3

Jeweils eine definierte Menge m₁ eines
a) Dioctyladipats mit einer Viskosität von 14 mm²/s (käuflich erhältlich bei Hüls AG, Marl),
b) α,ω-Divinylpolydimethylsiloxans mit einer Viskosität von 510 mm²/s,
c) α,ω-Divinylpolydimethylsiloxans mit einer Viskosität von 20 000 mm²/s,
d) α,ω-Divinylpolydimethylsiloxans mit einer Viskosität von 96 400 mm2/s,
e) α,ω-Trimethylsiloxypolydimethylsiloxans mit einer Viskosität von 245 mm²/s und
f/g) α,ω-Dihydroxypolydimethylsiloxans mit einer Viskosität von 76 800 mm²/s,
wird mit einer solchen Menge einer 70 %ige toluolische Lösung eines MQ-Harzes bestehend aus (CH₃)₃SiO_{1/2}- und SiO_{4/2}-Einheiten gemäß Beispiel 1 (Harzlösung V_{A}) oder einer 70 %igen toluolische Lösung eines MQ-Harzes bestehend aus (CH₃)₃SiO_{1/2}-, (CH₃)₂(CH₂=CH)SiO_{1/2}- und SiO_{4/2}-Einheiten gemäß Beispiel 2 (Harzlösung V_{B}) vermischt, die der in Tabelle 5 unter m₂ angegebenen Harzmenge entspricht. Anschließend wird Toluol bei einer Temperatur von 150°C und einem Druck von 5 hPa aus der erhaltenen Mischung entfernt.

Die Viskosität der erhaltenen Mischungen wird gleich nach der Herstellung ν₁ sowie nach 4-wöchiger Lagerung bei 25 °C ν₂ bestimmt.

In allen Fällen liegt eine transparente Mischung vor, in der sich das Harz vollständig, ohne Rückstände von Partikel gelöst hat.

Die Ergebnisse finden sich in Tabelle 5.

**Tabelle 5**

| Beispiel | Harzlösung | m₁ [g] | m₂ [g] | ν₁ [mm²/s] | ν₂ [mm²/s] |
|---|---|---|---|---|---|
| V3a | V_{A} | 350 | 350 | 302 | 302 |
| V3b | V_{B} | 300 | 200 | 2585 | 2589 |
| V3c | V_{B} | 300 | 200 | 26165 | 26170 |
| V3d | V_{B} | 300 | 200 | 76090 | 76100 |
| V3e | V_{A} | 300 | 200 | 5815 | 5810 |
| V3f | V_{A} | 350 | 150 | 81370 | - |
| V3g | V_{B} | 300 | 200 | 71390 | - |

### Beispiel 6

Jeweils eine definierte Menge m₁ eines
a/b) α,ω-Divinylpolydimethylsiloxans mit einer Viskosität von 96 400 mm²/s,
c/d) α,ω-Divinylpolydimethylsiloxans mit einer Viskosität von 652 000 mm²/s und
e) festen α,ω-Dihydroxypolydimethylsiloxans mit einer Brabenderplastizität von 4520 Nm
wird vorgelegt, eine definierte Menge m₂ von Harzpulver A, dessen Herstellung in Beispiel 1 beschrieben ist, oder von Harzpulver B, dessen Herstellung in Beispiel 2 beschrieben ist, in einer bestimmten Zeit t₁ zudosiert und dabei bei einer Temperatur von 25°C unter Kneten (Laborkneter der Fa. Werner & Pfleiderer, Typ LUK 075 TV; Kneterstufe 2) mit dem Polydimethylsiloxan vermischt. Anschließend wird die Mischung bei einer Aufheizrate von 0,7°C/min 2 Stunden geknetet. Die Innentemperatur beträgt nach 2 Stunden 110°C.

Die Viskosität der erhaltenen Mischungen wird gleich nach der Herstellung ν₁ sowie nach 4-wöchiger Lagerung bei 25 °C ν₂ bestimmt.

In allen Fällen liegt eine transparente Mischung vor, in der sich das Harz vollständig, ohne Rückstände von Partikel gelöst hat.

Die Ergebnisse finden sich in Tabelle 6.

**Tabelle 6**

| Beispiel | Harzpulver | m₁ [g] | m₂ [g] | t₁ [min] | ν₁ [mm²/s] | ν₂ [mm²/s] |
|---|---|---|---|---|---|---|
| 6a | B | 300 | 200 | 6 | 76150 | 76100 |
| 6b | A | 350 | 150 | 5 | 99200 | 99700 |
| 6c | A | 325 | 175 | 6 | 710000 | 735000 |
| 6d | B | 250 | 250 | 8 | 932000 | 940000 |
| 6e | A | 250 | 250 | 10 | - | - |
| V4 | V_{D} | 250 | 250 | 8 | 910000 | 925000 |

### Vergleichsbeispiel 4

Die in Beispiel 6 beschriebene Verfahrensweise wird wiederholt mit der Abänderung, daß anstelle von Harzpulver A oder B Harzpulver V_{D}, das in Vergleichsbeispiel 2 näher beschrieben ist, eingesetzt wird sowie dieses mit α,ω-Divinylpolydimethylsiloxan mit einer Viskosität von 652 000 mm²/s vermischt wird.

Es liegt eine transparente Mischung vor, in der sich das Harz vollständig, ohne Rückstände von Partikel gelöst hat.

Die Ergebnisse finden sich in Tabelle 6.

### Beispiel 7

### Schaumstabilisator

2 g der in Beispiel 4b erhaltenen Mischung aus Harzpulver A und Dioctyladipat, welche einen Resttoluolgehalt von 0,045 % aufweist, werden mit 200 g Dioctylphthalat in einem 500 ml Stahlbecher mittels Labordissolver bei 1000 Umdrehungen/Minute und 10 Minuten Mischdauer zu Schaum geschlagen.

Zum Vergleich wird mit 2 g der in Vergleichsbeispiel V3a erhaltenen Mischung aus Harzlösung V_{A} und Dioctyladipat, welche gemäß ¹H-NMR-Untersuchung einen Resttoluolgehalt von 0,25 % hat, wie oben beschrieben verfahren.

In Tabelle 7 sind die Schaumdichten direkt nach der Herstellung und nach 10 Minuten Ruhezeit aufgeführt.

**Tabelle 7**

| Mischung gemäß | Schaumdichte [g/ml] | |
|---|---|---|
| | nach Herstellung | nach 10 Minuten |
| Beispiel 4b | 0,64 | 0,64 |
| Vergleichsbeispiel V3a | 0,65 | 0,64 |

### Beispiel 8

### Schaumstabilisator

Unter Zugabe von 3 Teilen der in Beispiel 4b erhaltenen Mischung aus Harzpulver A und Dioctyladipat, welche einen Resttoluolgehalt von 0,045 % aufweist, werden 186 Teile einer Polyvinylchlorid-haltigen Paste mit Hilfe eines Hansa-Mischers geschäumt.

Zum Vergleich wird unter Zugabe von 3 Teilen der in Vergleichsbeispiel V3a erhaltenen Mischung aus Harzlösung V_{A} und Dioctyladipat, welche gemäß ¹H-NMR-Untersuchung einen Resttoluolgehalt von 0,25 % hat, wie oben beschrieben verfahren.

Mit beiden Harzmischungen wurden identische Naßschaumdichten von 0,62 g/ml erhalten.

### Beispiel 9

### Additionsvernetzende Trennbeschichtung

Eine Mischung aus
- 100 Teilen: der in Beispiel 4c hergestellten Mischung aus Harzpulver B und α,ω-Divinylpolydimethylsiloxan mit einer Viskosität von 510 mm²/s und einem Resttoluolgehalt von 0,028 %,
- 4,2 Teilen: eines α,ω-Trimethylsiloxypolymethylhydrogensiloxans mit einer Viskosität von 25 mm²/s,
- 0,25 Teilen: Ethinylcyclohexanol und
Platin in Form eines Platin-1,3-divinyl-1,1,3,3-tetramethyldisiloxankomplexes in einer solchen Menge, daß die Gesamtmischung einen Platingehalt, bezogen auf elementares Platin, von 100 ppm aufweist, wird hergestellt.

Diese Mischung wird mit Hilfe eines metallischen Ziehstabes (Handrakel) auf 65 g/m² schweres Pergaminpapier aufgezogen, so daß das Auftragsgewicht 1,5 g/m² beträgt. Das so beschichtete Papier wird dann im Umlufttrockenschrank 10 Sekunden bei 150°C gehärtet. Jeweils ein Teil des beschichteten Papiers wurde dann mit den Kautschukklebern der Bezeichnung "T-4154" und "K-7476" sowie Acrylkleber der Bezeichnung "A-7475" (jeweils käuflich erhältlich bei der Fa. Beiersdorf, D-Hamburg) abgedeckt. Die Laminate werden anschließend gemäß FINAT-Test Nr. 10 gealtert und geprüft. Die Ergebnisse finden sich in Tabelle 8.

**Tabelle 8**

| | Trennwerte [cN/cm*] | | |
|---|---|---|---|
| Kleber | "T-4154" | "K-7476" | "A-7475" |
| Beispiel 9 | 43,7 | 28,8 | 37,7 |
| Vergleichsbeispiel 5 | 43,5 | 28,2 | 38,1 |

| | | | |
|---|---|---|---|
| *) bei einer Abzugsgeschwindigkeit von 300 mm/Minute. | | | |

### Vergleichsbeispiel 5

### Additionsvernetzende Trennbeschichtung

Die in Beispiel 9 beschriebene Verfahrensweise wird wiederholt mit der Abänderung, daß anstelle von 100 Teilen der in Beispiel 4c hergestellten Mischung 100 Teile der in Vergleichsbeispiel V3b hergestellten Mischung aus Harzlösung V_{B} und α,ω-Divinylpolydimethylsiloxan mit einer Viskosität von 510 mm²/s, die einen Resttoluolgehalt gemäß ¹H-NMR-Messungen von 0,3 % hat, eingesetzt wird. Die Ergebnisse finden sich in Tabelle 8.

### Beispiel 10

### Additionsvernetzendes 2-Komponenten-System

Gemäß der in Beispiel 4 beschriebenen Verfahrensweise wird eine Mischung aus 30 % Harzpulver B und 70 % eines α,ω-Divinylpolydimethylsiloxans mit einer Viskosität von 20000 mm²/s hergestellt. Die Mischung, die eine Viskosität von 22 150 mm²/s und einen Resttoluolgehalt von 0,021 % aufweist, wird mit so viel Platin in Form eines Platin-1,3-divinyl-1,1,3,3-tetramethyldisiloxankomplexes versetzt, daß ein Platingehalt, bezogen auf elementares Platin, von 10 ppm resultiert (Masse I).

9 Teile der beschriebenen Masse I werden mit einem Teil einer Masse II abgemischt, welche hergestellt wird durch Vermischen von 84,5 Teilen eines α,ω-Trimethylsiloxypoly(dimethyl/methylhydrogen)siloxans mit einem Gehalt an Si-gebundenem Wasserstoff von 0,4 und einer Viskosität von 30 mm²/s, 7,5 Teilen eines α,ω-Divinylpolydimethylsiloxans mit einer Viskosität von 980 mm²/s, 7,5 Teilen eines α,ω-Dihydrogenpolydimethylsiloxans mit einer Viskosität von 1030 mm²/s und 0,2 Teilen Ethinylcyclohexanol.

Die so erhaltene Mischung wird anschließend für eine Dauer von einer Stunde bei 150°C vulkanisiert und das Vulkanisat untersucht. Die Ergebnisse finden sich in Tabelle 9.

**Tabelle 9**

| Vulkanisat aus | Shore-A-Härte | Transmission in [%]* |
|---|---|---|
| Beispiel 10 | 50 | 91 |
| Vergleichsbeispiel 6 | 49 | 91 |

| | | |
|---|---|---|
| *) ermittelt von den zu den jeweiligen Vulkanisaten gehörenden Massen I bei einer Wellenlänge von 700 nm (Spectronic 21 MV von Bausch & Lomb) | | |

### Vergleichsbeispiel 6

### Additionsvernetzendes 2-Komponenten-System

Gemäß der in Vergleichsbeispiel 3 beschriebenen Verfahrensweise wird aus Harzlösung V_{B}, α,ω-Divinylpolydimethylsiloxan mit einer Viskosität von 20 000 mm²/s und Platin in Form eines Platin-1,3-divinyl-1,1,3,3- tetramethyldisiloxankomplexes eine Mischung hergestellt, die in ihrer Zusammensetzung der in Beispiel 10 beschriebenen Masse I entspricht (Masse I). Die so hergestellte Masse I hat eine Viskosität von 22010 mm²/s und einen gemäß ¹H-NMR ermittelten Resttoluolgehalt von 0,7 %.

Mit 9 Teilen der beschriebenen Masse I wird, wie in Beispiel 10 beschrieben, verfahren. Die Ergebnisse finden sich in Tabelle 9.

### Beispiel 11

### Füllstoff enthaltendes, additionsvernetzendes 2-Komponenten-System z.B. zur Abformung oder Beschichtung

243 g eines α,ω-Divinylpolydimethylsiloxans mit einer Viskosität von 20 000 mm²/s werden in dem in Beispiel 6 beschriebenen Kneter vorgelegt. Innerhalb von 5 Minuten werden dann 186 g hydrophobe, pyrogen hergestellte Kieselsäure mit einem Kohlenstoffgehalt von 4,2 % (hergestellt nach dem in DE-A 38 39 900 bzw. der entsprechenden US 5,057,151 beschriebenen Verfahren) zudosiert und dabei mit dem Siloxan bei 25°C durch Kneten vermischt. Anschließend wird die Mischung unter gleichzeitigem Erwärmen 70 Minuten geknetet, wobei die Endtemperatur 150°C beträgt. Dann wird die Heizung abgeschaltet und die Mischung mit weiteren 221 g des oben beschriebenen Siloxans versetzt, 20 Minuten nachgeknetet und schließlich bei einem Druck von 300 hPa entgast. Die erhaltene Masse weist eine Viskosität von 521 000 mm²/s auf. 52 Teile der so erhaltenen Masse werden mit 31 Teilen der in Beispiel 4e erhaltenen Mischung aus Harzpulver B und α,ω-Divinylpolydimethylsiloxan mit einer Viskosität von 20 000 mm²/s, welche einen Resttoluolgehalt von 0,028 % aufweist, 16 Teilen eines α,ω-Divinylpolydimethylsiloxan mit einer Viskosität von 20 000 mm²/s, 0,5 Teilen eines Inhibitors zur Regulierung der Topfzeit sowie Platin in Form eines Platin-1,3-divinyl-1,1,3,3- tetramethyldisiloxankomplexes in einer Menge, daß ein Platingehalt von 20 ppm, bezogen auf elementares Platin resultiert, vermischt, wobei die Mischung eine Viskosität von 101 000 mm²/s und einen Resttoluolgehalt von 0,009 % aufweist (Masse I).

10 Teile der beschriebenen Masse I werden mit einem Teil einer Masse II abgemischt, welche hergestellt wird durch Vermischen von 61 Teilen eines α,ω-Trimethylsiloxypoly(dimethyl/methylhydrogen)siloxans mit einem Gehalt an Si-gebundenem Wasserstoff von 0,4 % und einer Viskosität von 30 mm²/s und 39 Teilen eines α,ω-Divinylpolydimethylsiloxans mit einer Viskosität von 20 000 mm²/s.

Die Mischung wird anschließend für eine Dauer von 2 Stunden bei 60°C vulkanisiert und das Vulkanisat untersucht. Die Ergebnisse finden sich in Tabelle 10.

**Tabelle 10**

| Vulkanisat | Shore-A -Härte | Weiterreißfestigkeit [N/mm] | Reißfestigkeit [N/mm²] | Reißdehnung [%] |
|---|---|---|---|---|
| Beispiel 11 | 42 | 27 | 5,7 | 350 |
| Beispiel 12 | 41 | 28 | 5,5 | 370 |
| Vergleichsbeispiel 7 | 41 | 25 | 5,3 | 390 |

### Beispiel 12

### Füllstoff enthaltendes, additionsvernetzendes 2-Komponenten-System z.B. zur Abformung oder Beschichtung

243 g eines α,ω-Divinylpolydimethylsiloxans mit einer Viskosität von 20 000 mm²/s werden in dem in Beispiel 6 beschriebenen Kneter vorgelegt. Innerhalb von 5 Minuten werden erst 186 g hydrophobe, pyrogen hergestellte Kieselsäure mit einem Kohlenstoffgehalt von 4,2 % (hergestellt nach dem in DE-A 38 39 900 bzw. der entsprechenden US 5,057,151 beschriebenen Verfahren) und dann innerhalb von 3 Minuten 157g Harzpulver B, dessen Herstellung in Beispiel 2 beschrieben ist, zudosiert und dabei mit dem Siloxan bei 25°C durch Kneten vermischt. Anschließend wird die Mischung unter gleichzeitigem Erwärmen 70 Minuten geknetet, wobei die Endtemperatur 150°C beträgt. Dann wird die Heizung abgeschaltet und die Mischung mit weiteren 221 g des oben beschriebenen Siloxans versetzt, 20 Minuten nachgeknetet und schließlich bei einem Druck von 300 hPa entgast. Die erhaltene Masse weist eine Viskosität von 875 000 mm²/s auf. 64,4 Teile der so erhaltenen Masse werden mit 34,6 Teilen eines α,ω-Divinylpolydimethylsiloxan mit einer Viskosität von 20 000 mm²/s, 0,5 Teile eines Inhibitors zur Regulierung der Topfzeit sowie Platin in Form eines Platin-1,3-divinyl-1,1,3,3- tetramethyldisiloxankomplexes in einer Menge, daß ein Platingehalt von 20 ppm, bezogen auf elementares Platin resultiert, vermischt, wobei die Mischung eine Viskosität von 100 500 mm²/s und einen Resttoluolgehalt von 0,009 % aufweist (Masse I).

Mit 10 Teilen der beschriebenen Masse I wird wie in Beispiel 11 beschrieben verfahren. Die Ergebnisse finden sich in Tabelle 10.

### Vergleichsbeispiel 7

### Füllstoff enthaltendes, additionsvernetzendes 2-Komponenten-System z.B. zur Abformung oder Beschichtung

Die in Beispiel 11 beschriebene Verfahrensweise wird wiederholt mit der Abänderung, daß anstelle der Mischung gemäß Beispiel 4e die in Vergleichsbeispiel V3c beschriebene Mischung aus Harzlösung V_{B} und α,ω-Divinylpolydimethylsiloxan mit einer Viskosität von 20 000 mm²/s, die gemäß ¹H-NMR einen Resttoluolgehalt von 0,8 % aufweist, eingesetzt wird. Die erhaltene Mischung hat eine Viskosität von 99800 mm²/s und einen Resttoluolgehalt von 0,25 %.

Mit 10 Teilen der so erhaltenen Mischung wird wie in Beispiel 11 beschrieben verfahren. Die Ergebnisse finden sich in Tabelle 10.

### Beispiel 13

### Silicongel

6 Teile der in Beispiel 4e erhaltenen Mischung aus Harzpulver B und α,ω-Divinylpolydimethylsiloxan mit einer Viskosität von 20 000 mm²/s, welche einen Resttoluolgehalt von 0,028 % aufweist, werden mit 94 Teilen eines α,ω-Divinylpolydimethylsiloxans mit einer Viskosität von 980 mm²/s, 0,025 Teilen eines Inhibitors zur Regulierung der Topfzeit und einer solchen Menge an Platin in Form eines Platin-1,3-divinyl-1,1,3,3- tetramethyldisiloxankomplexes, daß ein Platingehalt von 20 ppm, bezogen auf elementares Platin, resultiert, vermischt (Masse Ia). Masse 13a hat einen Resttoluolgehalt von 0,0017 %.

Eine Masse, die in ihrer Zusammensetzung der oben beschriebenen Masse Ia entspricht, wird in der Weise hergestellt, daß Harzpulver B in einer Mischung der entsprechenden Organopolysiloxane nach dem in Beispiel 4 beschriebenen Verfahren gelöst und anschließend die Lösung mit Inhibitor und Platin-Katalysator versetzt wird (Masse Ib). Masse Ib hat einen Resttoluolgehalt von 0,0017 %.

Masse Ia und Masse Ib werden jeweils im Gewichtsverhältnis 1 : 1 mit einer Masse II vermischt, die ihrerseits hergestellt wird durch Vermischen von 76 Teilen eines α,ω-Dihydrogenpolydimethylsiloxans mit einer Viskosität von 1030 mm²/s, 23 Teilen eines α,ω-Divinylpolydimethylsiloxans mit einer Viskosität von 980 mm²/s und einem Teil eines α,ω-Trimethylsiloxypoly(dimethyl/methylhydrogen)siloxans mit einem Gehalt an Si-gebundenem Wasserstoff von 0,18 % und einer Viskosität von 210 mm²/s.

Die beiden resultierenden Mischungen werden anschließend jeweils eine Stunde bei 100°C unter Erhalt von klebrigen Silicongelen, die sich z.B. zur Einbettung von Elektronikbauteilen eignen, gehärtet und untersucht. Die Ergebnisse finden sich in Tabelle 11.

**Tabelle 11**

| Vulkanisat | *Penetration [1/10 mm] | **Transmission [%] |
|---|---|---|
| Masse Ia + II | 310 | 91,5 |
| Masse Ib + II | 307 | 91,0 |
| Masse V8a + II | 312 | 91,0 |
| Masse V8b + II | 306 | 92,0 |

| | | |
|---|---|---|
| *) ermittelt gemäß DIN-ISO 2137 | | |
| **) ermittelt von den zu den jeweiligen Vulkanisaten gehörenden Massen Ia, Ib, V8a und V8b bei einer Wellenlänge von 700 nm (Spectronic 21 MV von Bausch & Lomb) | | |

### Vergleichsbeispiel 8

### Silicongel

Eine Masse, die in ihrer Zusammensetzung der in Beispiel 13 beschriebenen Masse Ia entspricht, wird in der Weise hergestellt, daß die in Vergleichsbeispiel V3c erhaltene Mischung aus Harzlösung V_{B} und α,ω-Divinylpolydimethylsiloxan mit einer Viskosität von 20 000 mm²/s, welche gemäß ¹H-NMR einen Resttoluolgehalt von 0,8 % aufweist, mit α,ω-Divinylpolydimethylsiloxan mit einer Viskosität von 980 mm²/s, Inhibitor und Platin-Katalysator vermischt wird (Masse V8a). Masse V8a hat einen Resttoluolgehalt von 0,0480 %.

Eine Masse, die in ihrer Zusammensetzung der in Beispiel 13 beschriebenen Masse Ia entspricht, wird in der Weise hergestellt, daß Harzlösung V_{B} in einer Mischung der entsprechenden Organopolysiloxane nach dem in Vergleichsbeispiel 3 beschriebenen verfahren gelöst und anschließend die Lösung mit Inhibitor und Platin-Katalysator versetzt wird (Masse V8b). Masse V8b hat einen Resttoluolgehalt von 0,4000 %.

Mit den Massen V8a und V8b wird wie in Beispiel 13 beschrieben verfahren. Die Ergebnisse finden sich in Tabelle 11.

## Patentansprüche

1. Organopolysiloxanharzpulver, die aus R₃SiO_{1/2}- und SiO_{4/2}-Einheiten bestehen mit einem Molverhältnis von M-zu Q-Einheiten im Bereich von 0,5:1 bis 1:1, wobei R die Bedeutung von organischem Rest oder Wasserstoffatom hat, mit einem mittleren Teilchendurchmesser (Medianwert D₅₀) von 70 bis 300 µm und einem Anteil von Harzteilchen, die einen Durchmesser < 45 µm haben, von weniger als 5 Gewichtsprozent, bezogen auf das Gesamtgewicht des Organopolysiloxanharzpulvers.

2. Organopolysiloxanharzpulver gemäß Anspruch 1, dadurch gekennzeichnet, daß sie einen Teilchendurchmesser von höchstens 1000 µm haben.

3. Organopolysiloxanharzpulver gemäß Anspruch 1 oder 2, dadurch gekennzeichnet, daß sie einen Gehalt an wasserunlöslichem organischen Lösungsmittel von weniger als 0,15 Gewichtsprozent, bezogen auf das Gesamtgewicht des Organopolysiloxanharzpulvers aufweisen.

4. Verfahren zur Herstellung von Organopolysiloxanharzpulver mit einem mittleren Teilchendurchmesser (Medianwert D₅₀) von 70 bis 300 µm und einem Anteil von Harzteilchen, die einen Durchmesser < 45 µm haben, von weniger als 5 Gewichtsprozent, bezogen auf das Gesamtgewicht des Organopolysiloxanharzpulvers, durch Sprühtrocknung von Organopolysiloxanharzlösungen, dadurch gekennzeichnet, daß eine Lösung von bei Raumtemperatur festem Organopolysiloxanharz in organischem Lösungsmittel bei einer Temperatur von 0 bis 100°C und einem Druck von 1 000 bis 30 000 hPa mittels einer Druckdüse am Kopf eines Sprühturmes verdüst wird und die erzeugten Flüssigkeitströpfchen durch das im Gleichstrom geführte Inertgas, welches eine Eintrittstemperatur von 100 bis 300°C hat, getrocknet werden sowie aus den so erhaltenen Harzteilchen am Boden des Sprühturmes mit einem weiteren Inertgasstrom, welcher mit einer Eintrittstemperatur von 50 bis 250°C von unten in den Trockenturm geleitet wird, eine Wirbelschicht erzeugt wird, wodurch das Harzpulver nachgetrocknet und durch Sichtung von Feinstaub befreit wird, wobei der so abgetrennte Feinstaub im oberen Teil des Sprühturmes und das erfindungsgemäße Harzpulver am unteren Ende des Sprühturmes ausgetragen wird.

5. Verfahren nach Anspruch 4, dadurch gekennzeichnet, daß eine Lösung von bei Raumtemperatur festem Organopolysiloxanharz in organischem Lösungsmittel bei einer Temperatur von 20 bis 60°C und einem Druck von 10 000 bis 20 000 hPa mittels einer Einstoffdruckdüse am Kopf eines Sprühturmes verdüst wird und die erzeugten Flüssigkeitströpfchen durch den im Gleichstrom geführten Stickstoffstrom, welcher eine Eintrittstemperatur von 150 bis 250°C hat, getrocknet werden sowie aus den so erhaltenen Harzteilchen am Boden des Sprühturmes mit einem weiteren Stickstoffstrom, welcher mit einer Eintrittstemperatur von 100 bis 200°C von unten in den Trockenturm geleitet wird, eine Wirbelschicht erzeugt wird, wodurch das Harzpulver nachgetrocknet und durch Sichtung von Feinstaub befreit wird, wobei der so abgetrennte Feinstaub im oberen Teil des Sprühturmes und das erfindungsgemäße Harzpulver am unteren Ende des Sprühturms ausgetragen wird.

6. Verfahren nach Anspruch 4 oder 5, dadurch gekennzeichnet, daß des sich bei den eingesetzten Harzlösungen um solche handelt, die dadurch hergestellt werden, daß in einer 1. Stufe
mindestens ein Silan der Formel
R₃SiOR¹ (I)
und/oder dessen Hydrolysat R₃SiOSiR₃, wobei
R gleich oder verschieden sein kann und einwertiger organischer Rest bedeutet und
R¹ einen Alkylrest bedeutet,
und mindestens ein Silan der Formel
Si(OR²)₄ (II)
und/oder dessen Teilhydrolysat, wobei
R² gleich oder verschieden sein kann und Alkylrest bedeutet,
sowie gegebenenfalls Organosiliciumverbindung, ausgewählt aus der Gruppe bestehend aus Silanen der Formel
R³ ₐSi(OR⁴)₄₋ₐ (III)
und/oder deren Teilhydrolysate, wobei
a 1 oder 2 ist,
R³ gleich oder verschieden sein kann und einwertiger organischer Rest bedeutet und
R⁴ gleich oder verschieden sein kann und Alkylrest bedeutet, und
Organo(poly)siloxanen der Formel
(R⁵ ₂SiO)_{b} (IV),
wobei
R⁵ gleich oder verschieden sein kann und einen einwertigen organischen Rest bedeutet und
b eine ganze Zahl im Wert von 3 bis 8 ist,
sowie deren Gemische,
mit Wasser in Gegenwart von Säure umgesetzt wird, wobei der entstandene Alkohol zumindest zum Teil abdestilliert wird,
in einer 2. Stufe
die in der 1. Stufe erhaltene homogene Reaktionsmasse in Anwesenheit von Base sowie mindestens einer solchen Menge an wasserunlöslichem organischen Lösungsmittel, die zur Erhaltung einer homogenen Reaktionsmasse ausreicht, umgesetzt wird und Wasser sowie Alkohol destillativ entfernt werden,
in einer 3. Stufe
die in der 2. Stufe erhaltene homogene Reaktionsmasse mit Säure neutralisiert wird, gegebenenfalls noch vorhandenes Wasser und Alkohol abdestilliert wird und das aus der Neutralisation entstandene, ausgefallene Salz entfernt wird sowie
gegebenenfalls in einer 4. Stufe
die in der 3. Stufe erhaltene homogene Reaktionsmasse von wasserunlöslichem organischen Lösungsmittel zum Teil befreit wird.

7. Verfahren nach einem oder mehreren der Ansprüche 4 bis 6, dadurch gekennzeichnet, daß die eingesetzten Lösungen von Organopolysiloxanharz in organischem Lösungsmittel einen Harzgehalt von 30 bis 80 Gewichtsprozent, bezogen auf das Gesamtgewicht der Harzlösung, haben.

8. Verfahren zur Herstellung von Organopolysiloxanzusammensetzungen, dadurch gekennzeichnet, daß Organopolysiloxanharzpulver gemäß einem oder mehreren der Ansprüche 1 bis 3 oder hergestellt gemäß einem oder mehreren der Ansprüche 4 bis 7 mit Organosiliciumverbindung sowie gegebenenfalls weiteren Komponenten vermischt wird.

9. Verfahren nach Anspruch 8, dadurch gekennzeichnet, daß als Organosiliciumverbindung Organopolysiloxane mit einer Viskosität von 10 bis 50·10⁶ mm²/s bei 25°C eingesetzt werden.

## Claims

1. Organopolysiloxane resin powders consisting of R₃SiO_{1/2} and SiO_{4/2} units, with a molar ratio of M to Q units of from 0.5:1 to 1:1, where R is an organic radical or a hydrogen atom, having a mean particle diameter (median value d₅₀) of from 70 to 300 µm, and a proportion of resin particles having a diameter < 45 µm of less than 5 percent by weight, based on the total weight of the organopolysiloxane resin powder.

2. Organopolysiloxane resin powders according to Claim 1, characterized in that they have a particle diameter of at most 1000 µm.

3. Organopolysiloxane resin powders according to Claim 1 or 2, characterized in that they have a content of water-insoluble organic solvent of less than 0.15 percent by weight, based on the total weight of the organopolysiloxane resin powder.

4. Process for preparing organopolysiloxane resin powders having a mean particle diameter (median value d₅₀) of from 70 to 300 µm, and a proportion of resin particles having a diameter < 45 µm of less than 5 percent by weight, based on the total weight of the organopolysiloxane resin powder, by spray drying an organopolysiloxane resin solution, characterized in that a solution of organopolysiloxane resin which is solid at room temperature in an organic solvent is atomized at a temperature of from 0 to 100°C and a pressure of from 1000 to 30000 hPa by means of a pressure nozzle at the top of a spray dryer and the liquid droplets produced are dried by means of the inert gas which is conveyed in cocurrent and has an inlet temperature of from 100 to 300°C, and a fluidized bed is produced from the resin particles thus obtained at the bottom of the spray dryer using a further inert gas stream which is introduced into the dryer from the bottom at an inlet temperature of from 50 to 250°C, by means of which the resin powder is further dried and freed of fine dust by classification, with the fine dust thus separated off being discharged in the upper part of the spray dryer and the resin powder of the present invention being discharged at the lower end of the spray dryer.

5. Process according to Claim 4, characterized in that a solution of organopolysiloxane resin which is solid at room temperature in an organic solvent is atomized at a temperature of from 20 to 60°C and a pressure of from 10,000 to 20,000 hPa by means of a single-fluid pressure nozzle at the top of a spray dryer and the liquid droplets produced are dried by means of the nitrogen stream which is conveyed in cocurrent and has an inlet temperature of from 150 to 250°C, and a fluidized bed is produced from the resin particles thus obtained at the bottom of the spray dryer using a further nitrogen stream which is introduced into the dryer from below at an inlet temperature of from 100 to 200°C, by means of which the resin powder is further dried and freed of fine dust by classification, with the fine dust thus separated off being discharged in the upper part of the spray dryer and the resin powder of the present invention being discharged at the lower end of the spray dryer.

6. Process according to Claim 4 or 5, characterized in that the resin solution used is one which is prepared by in a 1st stage,
reacting at least one silane of the formula
R₃SiOR¹ (I)
and/or its hydrolysate R₃SiOSiR₃, where
R can be identical or different and are each a monovalent organic radical and
R¹ is an alkyl radical,
and at least one silane of the formula
Si(OR²)₄ (II)
and/or its partial hydrolysate, where
R² can be identical or different and are each an alkyl radical,
and, if desired, an organosilicon compound selected from the group consisting of silanes of the formula
R³ ₐSi(OR⁴)₄₋ₐ (III)
and/or their partial hydrolysates, where
a is 1 or 2,
R³ can be identical or different and are each a monovalent organic radical and
R⁴ can be identical or different and are each an alkyl radical, and
organo(poly)siloxanes of the formula
(R⁵ ₂SiO)_{b} (IV)
where
R⁵ can be identical or different and are each a monovalent organic radical and
b is an integer from 3 to 8,
or their mixtures,
with water in the presence of acid, with the alcohol formed being at least partially distilled off,
in a 2nd stage,
reacting the homogeneous reaction mixture obtained in the 1st stage in the presence of base and at least that amount of water-insoluble organic solvent which is sufficient to maintain a homogeneous reaction mixture and removing water and alcohol by distillation,
in a 3rd stage,
neutralizing the homogeneous reaction mixture obtained in the 2nd stage with acid, distilling off any water
and alcohol still present and removing the precipitated salt formed in the neutralization and,
if desired in a 4th stage,
partially freeing the homogeneous reaction mixture obtained in the 3rd stage of water-insoluble organic solvent.

7. Process according to one or more of Claims 4 to 6, characterized in that the solutions of organopolysiloxane resin in organic solvent which are used have a resin content of from 30 to 80 percent by weight, based on the total weight of the resin solution.

8. Process for preparing organopolysiloxane compositions, characterized in that organopolysiloxane resin powder according to one or more of Claims 1 to 3 or prepared according to one or more of Claims 4 to 7 is mixed with organosilicon compound and, if desired, further components.

9. Process according to Claim 8, characterized in that organosilicon compounds used are organopolysiloxanes having a viscosity of from 10 to 50·10⁶ mm²/s at 25°C.

## Revendications

1. Poudres de résine d'organopolysiloxane, composées d'unités R₃SiO_{1/2} et SiO_{4/2} avec un rapport molaire d'unités M/Q dans l'intervalle de 0,5:1 à 1:1, dans lesquelles R signifie un radical organique ou un atome d'hydrogène, avec un diamètre particulaire moyen (valeur médiane D₅₀) de 70 à 300 µm et une proportion de particules de résine, ayant un diamètre < 45 µm, inférieure à 5% en poids, sur la base du poids total de la poudre de résine d'organopolysiloxane.

2. Poudres de résine d'organopolysiloxane suivant la revendication 1, caractérisées en ce qu'elles présentent un diamètre particulaire d'au maximum 1000 µm.

3. Poudres de résine d'organopolysiloxane suivant la revendication 1 ou 2, caractérisées en ce qu'elles présentent une teneur en solvant organique insoluble dans l'eau inférieure à 0,15% en poids, sur la base du poids total de la poudre de résine d'organopolysiloxane.

4. Procédé de préparation de poudres de résine d'organopolysiloxane présentant un diamètre particulaire moyen (valeur médiane D₅₀) de 70 à 300 µm et une proportion de particules de résine, ayant un diamètre < 45 µm, inférieure à 5% en poids, sur la base du poids total de la poudre de résine d'organopolysiloxane, par séchage par pulvérisation de solutions de résine d'organopolysiloxane, caractérisé en ce qu'une solution de résine d'organopolysiloxane solide à température ambiante dans un solvant organique est atomisée au moyen d'un gicleur à pression au sommet d'une tour de pulvérisation à une température de 0 à 100°C et sous une pression de 1000 à 30 000 hPa et les gouttelettes liquides produites sont séchées au moyen du gaz inerte, circulant à cocourant, lequel présente une température d'entrée de 100 à 300°C, et un lit fluidisé est produit avec les particules de résine ainsi obtenues à la base de la tour de pulvérisation au moyen d'un autre flux de gaz inerte, lequel est amené dans la tour de séchage par en dessous avec une température d'entrée de 50 à 250°C, la poudre de résine subissant ainsi un séchage supplémentaire et étant débarrassée de la fine poussière par triage, la fine poussière ainsi séparée étant évacuée dans la partie supérieure de la tour de pulvérisation et la poudre de résine selon l'invention étant évacuée à l'extrémité inférieure de la tour de pulvérisation.

5. Procédé suivant la revendication 4, caractérisé en ce qu'une solution de résine d'organopolysiloxane solide à température ambiante dans un solvant organique est atomisée au moyen d'un gicleur à pression pour constituant unique au sommet d'une tour de pulvérisation à une température de 20 à 60°C et sous une pression de 10 000 à 20 000 hPa et les gouttelettes liquides produites sont séchées au moyen du flux d'azote, circulant à cocourant, lequel possède une température d'entrée de 150 à 250°C, et un lit fluidisé est produit avec les particules de résine ainsi obtenues à la base de la tour de pulvérisation au moyen d'un autre flux d'azote, lequel est amené dans la tour de séchage par en dessous à une température d'entrée de 100 à 200°C, la poudre de résine subissant ainsi un séchage supplémentaire et étant débarrassée de la fine poussière par triage, la fine poussière ainsi séparée étant évacuée dans la partie supérieure de la tour de pulvérisation et la poudre de résine selon l'invention étant évacuée à l'extrémité inférieure de la tour de pulvérisation.

6. procédé suivant la revendication 4 ou 5, caractérisé en ce que les solutions de résine utilisées sont celles préparées de façon à ce que,
dans une étape 1,
au moins un silane de formule
R₃SiOR₁ (I)
et/ou son hydrolysat R₃SiOSiR₃,
R pouvant être identique ou différent et correspondant à un radical organique monovalent, et
R¹ correspondant à un radical alkyle,
et au moins un silane de formule
Si(OR²)₄ (II)
et/ou son hydrolysat partiel,
R² pouvant être identique ou différent et correspondant à un radical alkyle,
ainsi que, le cas échéant, un composé organosilicié choisi dans le groupe composé de silanes de formule
R³ ₐSi(OR⁴)₄₋ₐ (III)
et/ou leurs hydrolysats partiels,
a valant 1 ou 2,
R³ pouvant être identique ou différent et correspondant à un radical organique monovalent, et
R⁴ pouvant être identique ou différent et correspondant à un radical alkyle, et
des organopolysiloxanes de formule
(R⁵ ₂SiO)_{b} (IV)
R⁵ pouvant être identique ou différent et correspondant à un radical organique monovalent, et
b étant un nombre entier d'une valeur de 3 à 8, ainsi que leurs mélanges,
est mis à réagir dans l'eau en présence d'acide, l'alcool formé étant distillé au moins partiellement,
dans une étape 2,
le mélange de réaction homogène obtenu à l'étape 1 est mis à réagir en présence d'une base ainsi que d'au moins une certaine quantité de solvant organique insoluble dans l'eau suffisante pour obtenir un mélange de réaction homogène, et l'alcool et l'eau sont éliminés par distillation,
dans une étape 3,
le mélange de réaction homogène obtenu à l'étape 2 est neutralisé avec de l'acide, le cas échéant, l'eau et l'alcool encore présents sont distillés et le sel précipité formé lors de la neutralisation est éliminé, ainsi que,
le cas échéant, dans une étape 4,
le mélange de réaction homogène obtenu à l'étape 3 est débarrassé partiellement du solvant organique insoluble dans l'eau.

7. Procédé suivant l'une ou plusieurs des revendications 4 à 6, caractérisé en ce que les solutions utilisées de résine d'organopolysiloxane dans un solvant organique possèdent une teneur en résine de 30 à 80% en poids, sur la base du poids total de la solution de résine.

8. Procédé de préparation de compositions d'organopolysiloxane, caractérisé en ce que la poudre de résine d'organopolysiloxane suivant l'une ou plusieurs des revendications 1 à 3 ou préparée suivant l'une ou plusieurs des revendications 4 à 7 est mélangée avec un composé organosilicié ainsi que, le cas échéant, avec d'autres composants.

9. Procédé suivant la revendication 8, caractérisé en ce qu'on utilise comme composé organosilicié des organopolysiloxanes avec une viscosité de 10 à 50.10⁶ mm²/s à 25°C.
